# DEMANDE DE BREVET EUROPEEN

(11) **EP 4 446 253 A1**
(43) Date de publication de la demande: **16.10.2024**
(21) Numéro de dépôt: 24168836.5
(22) Date de dépôt: 05.04.2024
(51) Int. Cl.: B65G 1/04, B65G 69/24, B66F 9/075, B66F 11/04

(54) **SYSTEME DE MAINTENANCE POUR INSTALLATION DE TRANSPORT ET DE STOCKAGE**

(30) Priorité: 11.04.2023 FR 2303593
(71) Demandeur: Exotec Product France, 59170 Croix (FR)
(72) Inventeur: LEPILLIER, Loïc, 59150 WATTRELOS (FR); IGLA, Victor, 59178 HASNON (FR); HEITZ, Renaud, 59650 VILLENEUVE D'ASCQ (FR)
(74) Mandataire: Plasseraud IP

(57) **Abrégé**

La présente divulgation concerne un système de maintenance (10) pour une installation de transport et de stockage comprenant des racks de stockage (2) agencés de sorte à former au moins une allée (4) de circulation, le système de maintenance (10) comprenant :
- un châssis d'embase (11),
- une plateforme mobile (12) destinée à recevoir un opérateur,
- un appareil de levage (13) intercalé entre la plateforme mobile (12) et le châssis d'embase (11), et configuré pour permettre de monter la plateforme mobile (12) et la rétracter vers le châssis d'embase (11),
dans lequel le système de maintenance (10) comporte un dispositif de guidage vertical et de stabilisation (50) de la plateforme mobile (12), le dispositif de guidage vertical et de stabilisation (50) comportant au moins un organe de guidage configuré pour coopérer avec un montant (21) de rack de stockage donnant sur l'allée (4) de circulation respective.

## Description

### Domaine technique

La présente divulgation se rapporte au domaine de la maintenance pour des installations de transport et de stockage d'articles dans des entrepôts, en particulier pour des installations de transport et de stockage automatisées, couramment désignés « Automated Storage and Retrieval Systems » en langue anglaise et abréviés ASRS (en Français, "Système Automatique de Stockage et de Retrait"). Plus particulièrement, la présente divulgation concerne un système de maintenance pour une telle installation de transport et de stockage.

### Technique antérieure

Dans le domaine de la logistique, il est connu de réaliser des installations de stockage d'articles, par exemple dans des entrepôts, qui soient compacts et qui s'étendent en hauteur afin d'optimiser l'espace de stockage disponible. Une telle installation de transport et de stockage comprend généralement des racks de stockage agencés de manière compacte et des allées de circulation desservant de part et d'autre des racks de stockage. Les racks de stockage sont destinés à accueillir et à stocker des articles et définissent à cette fin, au sein même de leur structure, des colonnes consécutives d'alvéoles, une alvéole définissant un emplacement de stockage. Ces alvéoles sont destinées à recevoir des bacs ou plus généralement des réceptacles, dans lesquels sont placés et stockés des articles. Lesdits articles sont ensuite réunis pour constituer des commandes.

Certaines des installations de stockage, portant le nom de ASRS, mettent en oeuvre des véhicules à guidage automatique, en particulier configurés pour le placement et le retrait des articles dans lesdits racks de stockage. Les véhicules à guidage automatique ci-après désignés par leur abréviation AGV selon l'expression en langue anglaise « Automatic Guided Vehicles » sont, de manière générale, des robots qui se déplacent de façon autonome sans intervention humaine. Les AGV peuvent par exemple être des navettes, des chariots élévateurs, des transtockeurs, ou encore des robots. Les AGV peuvent par exemple se déplacer suivant au moins une direction, voire les deux directions d'une surface horizontale qui peut être typiquement le sol de l'entrepôt. Les véhicules à guidage automatique, peuvent aussi se déplacer verticalement en grimpant sur les racks de stockage. De telles installations de stockage sont notamment divulguées par le document WO 2019/072432. A cet effet, les véhicules sont typiquement pourvus de moyens de grimpe tels que des roues dentées motorisées engrenant avec un élément de grimpe (typiquement une crémaillère ou encore une chaîne à rouleaux) agencé sur la hauteur d'un montant de rack. De temps à autre, il peut arriver qu'un véhicule se retrouve en biais et se retrouve bloqué en hauteur nécessitant un dépannage.

Dans un tel cas, on utilise une nacelle élévatrice mobile comportant une structure extensible montée sur un châssis porteur, automoteur ou non, pour assurer le positionnement en hauteur d'une plateforme de travail pouvant recevoir un opérateur, en particulier pour effectuer des travaux de maintenance en hauteur. La structure extensible est par exemple formée de bras articulés et/ou télescopiques. De telles nacelles élévatrices mobiles présentent l'avantage d'être flexibles, pouvant notamment être déplacées d'une allée de circulation à une autre, aisément. Cependant, ces nacelles élévatrices mobiles ne permettent pas l'atteinte de hauteurs élevées dans le contexte d'une installation de transport et de stockage compacte, à moins d'être stabilisées par des moyens encombrants (en poids et/ou en emprise au sol), ce qui vient impacter en retour la flexibilité offerte à la base par ce type de nacelle.

Cette nacelle élévatrice mobile est une solution flexible utilisée par la présente Demanderesse, pour réaliser la maintenance en hauteur et en particulier autoriser un dépannage d'un véhicule bloqué en hauteur d'une installation ASRS.

On connait encore des documents FR 2 919 591 B1 ou DD 252 815 A1, un élévateur installé dans chacune des allées de circulation, et utilisé à la fois pour monter et descendre les articles afin de permettre leur placement et leur retrait dans et depuis les alvéoles, et pour effectuer des travaux de maintenance ou de montage en hauteur par un opérateur.

Dans ces documents, l'élévateur comprend un mât porteur et une plateforme de travail mobile en translation verticale par rapport au mât, guidé par le mât. Le mât est fixé à deux extrémités verticales respectivement au sol et au plafond de l'installation. Le mât est monté à deux extrémités verticales sur des rails le long de l'allée correspondante, les rails étant fixés respectivement au sol et au plafond de l'installation, de sorte à permettre une translation de l'élévateur le long des rails dans l'allée. L'ancrage de l'élévateur au sol et au plafond permet d'assurer une stabilité autorisant l'élévation et la descente de charges sur une hauteur élevée, à savoir pouvant aller au-delà d'une dizaine de mètres. Toutefois, il s'agit d'une solution encombrante et peu flexible, car elle nécessite un élévateur monté par allée, et le cas échéant l'aménagement de rails au sol et au plafond dans toutes les allées.

Le document JP2003-095407 A décrit un autre type d'élévateur pour monter ou descendre un article ou un véhicule dans un rack de stockage et le placer dans ou le retirer d'une alvéole du rack. L'élévateur se déplace latéralement au rack dans une tranchée arrangée dans une allée entre deux racks et comprend essentiellement une plateforme mobile en translation verticale dans l'allée, par l'intermédiaire d'un dispositif de levage constitué d'un treuil monté dans un rail en haut de chacun des racks et d'un dispositif hydraulique de montée et descente disposé sous la plateforme. Un chariot est en outre agencé sur la plateforme afin de déposer ou retirer l'article ou le véhicule d'une alvéole d'un rack. Cette solution, non adaptée à recevoir un opérateur de maintenance du fait de la présence du chariot sur la plateforme, présente les mêmes inconvénients en termes d'encombrement et de manque de flexibilité que les élévateurs des documents FR 2 919 591 B1 ou DD 252 815 A1.

Selon les constatations de la Demanderesse, les rails au sol constituent par ailleurs des obstacles à la circulation de véhicules à guidage automatique des installations ASRS : un tel élévateur est une solution de maintenance peu compatible avec les installations ASRS.

Il existe par conséquent un besoin pour un système de maintenance flexible et présentant un encombrement limité pour effectuer des travaux de maintenance en hauteur dans une installation de transport et de stockage.

### Résumé

La présente divulgation vient améliorer la situation.

Il est proposé un système de maintenance pour une installation de transport et de stockage comprenant des racks de stockage agencés de sorte à former au moins une allée de circulation entre deux racks de stockage respectifs. Les racks de stockage comportent des montants verticaux. Le système de maintenance comprend un châssis d'embase apte à circuler au sol dans l'au moins une allée de circulation, une plateforme mobile destinée à recevoir un opérateur et un appareil de levage intercalé entre la plateforme mobile et le châssis d'embase. L'appareil de levage comprend au moins une partie de base solidaire du châssis d'embase, une partie mobile solidaire de la plateforme mobile, et un mécanisme d'extension configuré pour déployer la partie mobile en hauteur afin de monter la plateforme mobile et la rétracter vers le châssis d'embase dans une position de moindre encombrement vertical du système de maintenance. Le système de maintenance comporte un dispositif de guidage vertical et de stabilisation de la plateforme mobile, le dispositif de guidage vertical et de stabilisation comportant au moins un organe de guidage configuré pour coopérer avec un montant donnant sur l'allée de circulation respective.

Le système de maintenance selon la présente divulgation offre l'avantage considérable, d'une part, de pouvoir être mobile, flexible et peu encombrant, et d'autre part, de pouvoir atteindre une hauteur plus élevée en comparaison d'un véhicule de maintenance ne présentant pas de dispositif de guidage et de stabilisation. En effet, le dispositif de guidage et de stabilisation offre une meilleure stabilité au système de maintenance, pour permettre à un opérateur d'effectuer des opérations en hauteur en toute sécurité, tout en limitant l'encombrement du système de maintenance, en termes d'emprise au sol et/ou de masse. De plus, un tel système de maintenance ne nécessite pas la mise en place d'infrastructures supplémentaires dans l'installation de transport et de stockage, par exemple des infrastructures de guidage ou d'encrage, au sol ou au plafond de l'installation de transport et de stockage. En effet, le système de maintenance peut circuler librement dans les allées de circulation.

Dans la suite de la description, il est fait référence à une première direction, une deuxième direction et une troisième direction. La première direction coïncide avec une direction verticale s'étendant notamment verticalement depuis le sol de l'installation de transport et de stockage. La première direction est perpendiculaire à la deuxième direction et la troisième direction. La deuxième direction est perpendiculaire à la troisième direction. Il est donc compris que la deuxième direction et la troisième direction forment des directions horizontales, ici orthogonales l'une par rapport à l'autre.

Les caractéristiques exposées dans les paragraphes suivants peuvent, optionnellement, être mises en oeuvre, indépendamment les unes des autres ou en combinaison les unes avec les autres.

Avantageusement, la plateforme mobile et/ou la partie mobile du mécanisme d'extension peuvent comporter le dispositif de guidage vertical et de stabilisation. En effet, la partie mobile du mécanisme d'extension étant solidaire de la plateforme mobile, le dispositif de guidage et de stabilisation peut être positionné sur cette partie mobile tout en permettant le guidage et la stabilisation de la plateforme mobile lors de son extension et de sa rétractation. En somme, le dispositif de guidage vertical et de stabilisation doit avantageusement être apte à s'élever en hauteur et à se rétracter avec le châssis en accompagnant le mouvement d'élévation et de descente de la plateforme mobile pour assurer le guidage et la stabilisation en hauteur de celle-ci. Il est également envisageable que la plateforme mobile et la partie mobile du mécanisme d'extension comportent chacune respectivement un dispositif de guidage vertical et de stabilisation.

De manière avantageuse, le dispositif de guidage vertical et de stabilisation comprend un mécanisme de déploiement configuré pour passer ledit au moins un organe de guidage du dispositif de guidage verticale et de stabilisation d'une position dégagée d'un montant et jusqu'à une position engagée avec le montant respectif. La mise en oeuvre d'un mécanisme de déploiement permet avantageusement de réduire l'encombrement du système de maintenance lorsque l'au moins un organe de guidage n'est pas en position engagée sur le montant respectif, en particulier lors de la circulation du système de maintenance dans une allée de circulation.

Avantageusement, ledit au moins un organe de guidage est configuré pour assurer un guidage linéaire de la plateforme mobile le long du montant respectif. Le guidage doit notamment permettre d'assurer l'appui de l'organe de guidage contre le moment tout en limitant les frottements de l'organe de guidage et du montant respectif.

Ledit au moins un organe de guidage dudit dispositif de guidage vertical et de stabilisation peut de manière avantageuse comprendre au moins une roue de guidage vertical destinée à venir rouler contre un montant, la roue de guidage vertical ayant un axe de rotation perpendiculaire à une direction longitudinale du montant. D'autres alternatives de guidage peuvent être envisagées.

L'organe de guidage peut être configuré pour assurer un guidage linéaire à billes de la plateforme mobile le long du montant respectif. Ce type de guidage permet de réduire la friction et les pressions de contact entre les surfaces de l'organe de guidage et du montant, offrant ainsi un déplacement précis de l'organe de guidage par rapport au montant.

L'organe de guidage peut être configuré pour assurer un guidage linéaire à rouleaux de la plateforme mobile le long du montant respectif. A cette fin, l'organe de guidage peut comprendre un ou plusieurs rouleaux cylindriques. Ce type de guidage permet de pour réduire la friction entre l'organe de guidage et le montant. Ce type de guidage présente l'avantage d'être plus durable et de pouvoir supporter des charges plus lourdes que le guidage à billes.

L'organe de guidage peut être configuré pour assurer un guidage linéaire à patin de la plateforme mobile le long du montant respectif. Ce type de guidage permet de réduire la friction entre les surfaces de glissement entre l'organe de guidage et le montant respectif. Ce type de guidage est notamment avantageux pour des applications nécessitant des mouvements rapides et répétitifs.

L'organe de guidage peut être configuré pour assurer un guidage linéaire magnétique de la plateforme mobile le long du montant respectif. Ce type de guidage met notamment en oeuvre des champs magnétiques pour permettre de supporter la charge de la plateforme mobile. Ce type de guidage offre l'avantage de limiter la friction entre l'organe de guidage et le montant, d'assurer une précision et une capacité de charge élevée.

L'organe de guidage peut être configuré pour assurer un guidage linéaire à glissière de la plateforme mobile le long du montant respectif. L'organe de guidage peut être configuré pour coopérer avec le montant respectif sous forme de rail de guidage. En particulier, l'organe de guidage et le montant respectif sont configurés pour être en contact surface contre surface l'un avec l'autre de sorte à former une liaison glissière. L'organe de guidage et le montant respectif sont en particulier réalisés dans un matériau présentant un coefficient de frottement suffisamment faible pour permettre un bon fonctionnement de la liaison glissière. L'organe de guidage et le rail de guidage peuvent par exemple être en acier. Cette solution présente l'avantage d'être simple et peu coûteuse. Elle peut être avantageuse dans des applications nécessitant des mouvements linéaires pour parcourir de longues distances.

Avantageusement, ledit dispositif de guidage vertical et de stabilisation comprend un mécanisme de précontrainte destiné à exercer une pression dudit au moins un organe de guidage contre un montant. Ceci permet de compenser un éventuel jeu entre l'organe de guidage et le montant le long de celui-ci. En particulier, lorsque l'on cherche, comme dans la présente divulgation, à atteindre des hauteurs élevées, le montant peut présenter une flèche par rapport à la première direction. Le mécanisme de précontrainte permet de compenser cette flèche et d'assurer la stabilité de la plateforme mobile jusqu'à la hauteur maximale que peut atteindre cette dernière.

Le mécanisme de précontrainte peut comporter un organe ressort configuré pour contraindre élastiquement ledit au moins un organe de guidage sur le montant en compensant un jeu sur la hauteur des montants.

Avantageusement, le mécanisme de déploiement peut comprendre un dispositif de manoeuvre configuré pour passer ledit au moins un organe ressort d'un état de moindre contrainte, voire non contraint, dans la position dégagée dudit au moins un organe de guidage jusqu'à un état de plus forte contrainte dudit au moins un organe de guidage, dans la position engagée de l'organe de guidage.

Avantageusement, le dispositif de guidage vertical et de stabilisation comporte au moins une paire d'organes de guidage. Chaque organe de guidage de la paire d'organes de guidage peut notamment être configuré pour prendre appui sur un montant respectif suivant une même direction mais selon un sens opposé d'un appui de l'autre organe de guidage de la paire d'organes de guidage sur un montant respectif. Ceci permet d'assurer une meilleure stabilité de la plateforme mobile lors du guidage en hauteur de la plateforme mobile. Une paire, par exemple chaque paire, de l'au moins une paire d'organes de guidage peut avantageusement être destinée à coopérer avec des montants positionnés respectivement de part et d'autre d'une allée de circulation respective. Ceci permet d'assurer un guidage de la plateforme mobile de part et d'autre de l'allée de circulation respective. Alternativement, les organes de guidage d'une paire, en particulier de chaque paire, d'organes de guidage peuvent être destinés à coopérer avec un même montant, ou avec deux montants positionnés sur une même rangée de montants.

Le dispositif de guidage vertical et de stabilisation peut comprendre une paire d'organes de guidage, deux paires d'organes de guidage, ou plus de deux paires d'organes de guidage. Le nombre de paires d'organes de guidage, leur configuration et leur positionnement par rapport au système de maintenance est notamment adapté pour assurer la stabilité en hauteur de la plateforme mobile et la partie mobile du mécanisme d'extension. Le nombre de paires d'organes de guidage et leur positionnement peut, en particulier, correspondre à une longueur de la plateforme mobile et à la hauteur maximale pour le déploiement de la partie mobile du mécanisme d'extension.

Il est également envisageable de mettre en oeuvre un dispositif de guidage et de stabilisation comprenant un nombre impair d'organes de guidage. L'important est que le nombre d'organes de guidage, leur configuration et leur positionnement permet d'assurer la stabilité de la plateforme mobile, en particulier dans un plan sensiblement perpendiculaire à la première direction, lors de son extension en hauteur et lors de sa rétraction.

Avantageusement, ledit système de maintenance est tel que le mécanisme d'extension est configuré pour déployer la partie mobile jusqu'à une hauteur maximale supérieure ou égale à 10 m, en particulier supérieure ou égale à 12 m. Le système de maintenance peut présenter une masse inférieure ou égale à 500 kg, et présenter, notamment le châssis d'embase, une emprise au sol maximale inférieure à 1500 mm en longueur, et en particulier de 1200 mm, et inférieure à 750 mm en largeur, en particulier de 700 mm. On entend par emprise au sol, la surface circonférentielle maximale occupée par le système de maintenance au sol. Ces caractéristiques permettent d'assurer une flexibilité et une maniabilité du système de maintenance, dues à un encombrement réduit du système de maintenance en termes d'emprise au sol et de masse, tout en permettant l'atteinte d'une hauteur maximale élevée.

En particulier, l'encombrement du système de maintenance est avantageusement tel qu'il correspond à un encombrement d'une nacelle élévatrice mobile classique du commerce, telle que précédemment décrite. En particulier, l'encombrement de la plateforme mobile peut correspondre à l'encombrement d'un ensemble formé du panier et du mât d'une telle nacelle élévatrice mobile classique. La présente divulgation permet par conséquent d'adapter facilement une nacelle élévatrice mobile du commerce, en particulier en y ajoutant le dispositif de guidage vertical et de stabilisation, afin de permettre d'élever la plateforme mobile sur une hauteur plus grande que la nacelle élévatrice mobile classique sans nécessiter l'augmentation de l'emprise au sol de la nacelle élévatrice mobile classique pour en assurer la stabilité.

L'organe de guidage peut notamment être configuré pour coopérer avec différents profils de montants. Plus précisément, l'organe de guidage peut être configuré pour venir contre au moins une surface d'appui d'un montant respectif, la surface d'appui s'étendant selon un plan dont la normale est perpendiculaire à la première direction. Par exemple, l'organe de guidage peut être configuré pour venir contre une unique surface d'appui, ou deux surfaces d'appui d'un montant respectif, voire plus de deux surfaces d'appui. La coopération des organes de guidage avec les surfaces d'appui est en particulier adaptée pour empêcher un mouvement du dispositif de guidage et de stabilisation dans un plan perpendiculaire à la première direction lorsque qu'il est engagé sur les montants.

Avantageusement, le châssis d'embase comprend deux paires de roues pour la circulation du système sur le sol. Le châssis d'embase peut comprendre un véhicule motorisé ou non.

De manière avantageuse, ledit châssis d'embase est équipé d'au moins un dispositif de guidage horizontal s'étendant en longueur suivant le châssis d'embase et étant configuré pour à coopérer avec des éléments de racks de stockage, de positions discontinues suivant la longueur de l'allée de maintenance afin d'assurer le guidage du système de maintenance le long de l'allée de maintenance. Ainsi, il est plus aisé de positionner correctement le système de maintenance dans l'allée de maintenance afin de pouvoir faciliter la maniabilité du système de maintenance et l'engagement du système de maintenance sur les montants.

Le mécanisme d'extension configuré pour déployer la partie mobile en hauteur afin de monter la plateforme mobile et la rétracter vers le châssis d'embase dans la position de moindre encombrement vertical du système de maintenance peut comporter au moins un, par exemple un ou plusieurs, mât télescopique ou un mécanisme de levage à ciseaux.

Selon un autre aspect, il est proposé une installation de transport et de stockage comprenant des racks de stockage comportant des colonnes consécutives d'alvéoles. En particulier, chacune des alvéoles définit un emplacement de stockage destiné à recevoir un ou plusieurs articles, par exemple agencés dans un bac. Les racks de stockage sont notamment agencés de sorte à former au moins une allée de circulation entre deux racks de stockage respectifs. Les racks de stockage comportent des montants verticaux. L'installation comprend en outre un système de maintenance tel que précédemment décrit configuré pour circuler dans l'au moins une allée de circulation. L'au moins un organe de guidage du dispositif de guidage vertical et de stabilisation du système de maintenance est configuré pour coopérer avec un montant de rack de stockage donnant sur une allée de circulation respective.

De manière avantageuse, chacune de l'au moins une allée de circulation, entre deux racks de stockage respectifs, est formée d'une pluralité de colonnes de circulation verticale consécutives, chaque colonne de circulation verticale desservant au moins une colonne d'alvéoles respective. L'installation comprend en outre au moins un véhicule automatisé configuré pour s'élever ou descendre dans une colonne de circulation verticale. Le véhicule peut être un AGV, l'acronyme AGV désignant « Automated Guided Vehicle ». Chacun de l'au moins un véhicule comprend des moyens de grimpe adaptés pour coopérer avec des montants des racks de stockage donnant sur ladite colonne de circulation verticale. Le système de maintenance est alors notamment configuré pour permettre la réalisation d'opérations en hauteur par un opérateur, en particulier des opérations de montage et/ou de maintenance, et notamment de la maintenance d'un véhicule. En effet, le véhicule peut, en opération, se retrouver bloqué en hauteur dans une colonne de circulation verticale, par exemple suite à une panne. Il arrive par exemple que le véhicule se retrouve en biais, arc-bouté contre les éléments de grimpe, c'est-à-dire que le châssis du véhicule est incliné par rapport à un plan horizontal perpendiculaire à la première direction. Le système de maintenance permet de faire intervenir un opérateur en hauteur afin de débloquer le véhicule. De plus, le système de maintenance ne nécessite pas la mise en place d'infrastructure au sol, par exemple de guidage ou d'encrage, permettant ainsi de faciliter la circulation de véhicules dans les allées de circulation, et même sous les racks de stockage le cas échéant.

De manière avantageuse, les moyens de grimpe de l'un de l'au moins un véhicule agencé dans une colonne de circulation verticale et le dispositif de guidage vertical et de stabilisation de la plateforme mobile guidée dans une colonne de circulation adjacente, sont configurés pour coopérer simultanément avec un même montant d'un des racks de stockage sans gêner le déplacement, suivant la direction du montant, du véhicule respectif ou de la plateforme mobile respective par rapport audit même montant. Cette caractéristique permet avantageusement d'approcher le système de maintenance au plus proche d'un véhicule bloqué pour en assurer la maintenance.

Selon un autre aspect, il est proposé un procédé de maintenance d'une installation telle que précédemment décrite. Le procédé comprend :
- déplacer le système de maintenance jusqu'à une colonne de circulation verticale consécutive à une colonne de circulation verticale dans laquelle un véhicule est bloqué,
- coupler l'organe de guidage du dispositif de guidage vertical et de stabilisation avec un montant donnant sur l'allée de circulation respective,
- déployer la plateforme mobile à hauteur du véhicule bloqué.

Le procédé selon la présente divulgation offre par conséquent l'avantage d'être facilement mis en oeuvre tout en assurant la sécurité d'un opérateur lors d'une intervention en hauteur. Le déblocage du véhicule selon un étape peut être effectué par un opérateur, de manière manuelle. Il est encore possible d'envisager d'équiper la plateforme d'un préhenseur en particulier robotisé pour assurer le déblocage et la saisie du véhicule.

### Brève description des dessins

D'autres caractéristiques, détails et avantages apparaîtront à la lecture de la description détaillée ci-après, et à l'analyse des dessins annexés, sur lesquels :
[Fig. 1] illustre schématiquement une vue d'un exemple d'installation de transport et de stockage selon un mode de réalisation.
[Fig. 2] illustre schématiquement une vue d'un exemple de rack de stockage selon un mode de réalisation.
[Fig. 3] et [Fig. 4] illustrent schématiquement respectivement deux vues d'un exemple de racks de stockage et d'un système de maintenance selon un mode de réalisation.
[Fig. 5], [Fig. 6], [Fig. 7], [Fig. 8] et [Fig. 9] illustrent schématiquement une vue de dessus selon une première direction Z verticale d'exemples de racks de stockage et du système de maintenance selon un mode de réalisation.
[Fig. 10] illustre schématiquement une vue de dessous selon la première direction Z d'un exemple du système de maintenance respectivement dans une configuration engagée (Figure 10B) et dégagée (Figure 10A) d'organes de guidage du système de maintenance selon un mode de réalisation.
[Fig. 11] illustre schématiquement une vue agrandie d'un mécanisme de déploiement et d'un mécanisme de précontrainte du système de maintenance selon un mode de réalisation.
[Fig. 12] illustre schématiquement une vue agrandie d'un organe de guidage du système de maintenance et d'un moyen de grimpe d'un véhicule coopérant avec un même montant de rack de stockage selon un mode de réalisation.
[Fig. 13] illustre schématiquement des étapes d'un procédé de maintenance selon un mode de réalisation.

### Description des modes de réalisation

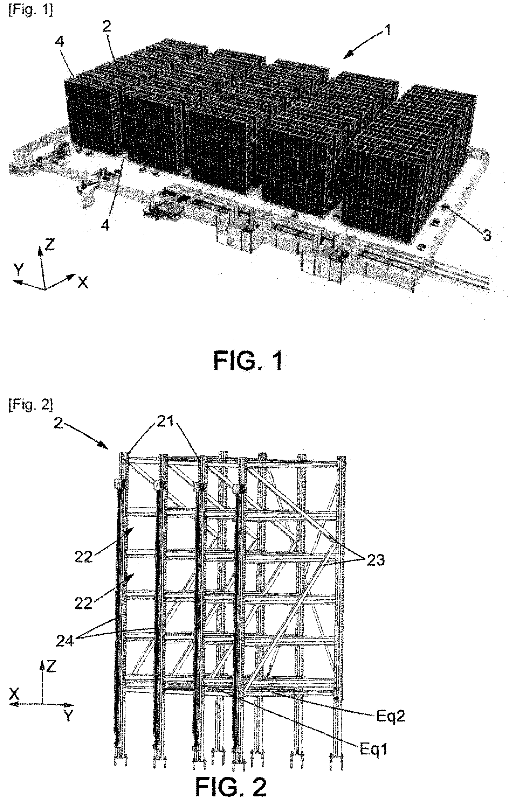

Il est maintenant fait référence à la figure 1 représentant schématiquement un exemple d'installation 1 de transport et de stockage, par exemple dans un entrepôt, selon un aspect de la présente divulgation. Selon un autre aspect, la présente divulgation concerne un système de maintenance, en particulier pour une telle installation 1 de transport et de stockage.

Dans la suite de la description, il est fait référence à une première direction Z, une deuxième direction X et une troisième direction Y. Dans les exemples représentés, la première direction Z coïncide avec une direction verticale s'étendant notamment verticalement depuis le sol de l'installation 1 de transport et de stockage. La première direction Z est perpendiculaire à la deuxième direction X et la troisième direction Y. La deuxième direction X est perpendiculaire à la troisième direction Y. Il est donc compris que la deuxième direction X et la troisième direction Y forment des directions horizontales, ici orthogonales l'une par rapport à l'autre.

L'installation 1 de transport et de stockage comprend notamment au moins deux, en particulier plusieurs, racks de stockage 2, pouvant aussi être désignés par le terme de « rayonnage », destinés à recevoir des articles pour leur stockage. Les racks de stockage 2 s'étendent avantageusement en hauteur selon la première direction Z, jusqu'à une hauteur maximale supérieure ou égale à 10 m, en particulier supérieure ou égale à 12 m, de préférence supérieure ou égale à 14 m.

La figure 2 illustre un tel rack de stockage 2. Chacun des racks de stockage 2 comporte des colonnes consécutives d'alvéoles 22, les alvéoles de chacune des colonnes d'alvéoles 22 étant superposées suivant la hauteur. En particulier, chacune des alvéoles 22 définit un emplacement de stockage destiné à recevoir un ou plusieurs articles, par exemple agencés dans un bac. Lesdits articles sont ensuite réunis pour constituer des commandes. Plus précisément, les colonnes consécutives d'alvéoles 22 de chacun des racks de stockage 2 s'étendent le long de la troisième direction Y. L'accès à une alvéole 22 pour placer ou retirer un article et/ou un bac peut s'effectuer depuis au moins l'un des côtés du rack de stockage selon la deuxième direction X.

Chacun des racks de stockage 2 comporte des montants 21 verticaux. Le montant 21 comprend notamment un poteau de forme rectiligne s'étendant selon la première direction Z. Une extrémité inférieure du poteau est configurée pour être fixée au sol. Le rack de stockage 2 comprend notamment au moins deux rangées de montants, en particulier deux rangées de montants, suivant la troisième direction Y. Les montants de chaque rangée de montants sont notamment régulièrement espacés suivant la troisième direction Y. Chaque montant 21 de l'une des rangées de montants est aligné avec un montant 21 de chacune des autres rangées de montants selon la deuxième direction X. Chaque alvéole 22 est délimitée selon la troisième direction Y par deux montants 21 successifs d'une même rangée de montants. Chaque alvéole 22 peut en outre être délimitée selon la deuxième direction X par au moins deux montants 21 selon la deuxième direction X respectivement d'une et d'une autre rangée de montants 21. Dans l'exemple représenté à la figure 2, le rack de stockage 2 comprend deux rangées de montants 21 suivant la troisième direction Y. Les montants 21 sont maintenus parallèles entre eux suivant la première direction Z par un système d'entretoisements 23.

Les alvéoles 22 superposées peuvent être définies, pour chaque colonne d'alvéoles 22 par des couples d'interfaces de fixation superposées. Chaque couple d'interfaces de fixation comprend une première interface de fixation Eq1, solidaire d'au moins deux montants 21 suivant la deuxième direction X, et une deuxième interface de fixation Eq2 solidaire d'au moins deux autres montants 21 suivant la deuxième direction X, l'au moins deux montants 21 solidaires de la première interface de fixation Eq1 étant décalés suivant la troisième direction Y de l'au moins deux montants 21 solidaires de la deuxième interface de fixation Eq2. La première interface de fixation Eq1 et la deuxième interface de fixation Eq2 comprennent des portions de soutien, saillantes l'une vers l'autre, pour le soutien d'un bac, ou plus généralement d'un conteneur, dans ladite alvéole 22.

Les racks de stockage 2 sont agencés de sorte à former au moins une allée 4 de circulation entre des racks de stockage 2 respectifs, en particulier alignés les uns par rapport aux autres. Plus précisément, comme illustré à la figure 1, au moins une allée 4 de circulation, en particulier plusieurs allées de circulation, s'étendent selon la troisième direction Y, entre deux racks de stockage 2 respectifs. Les deux racks de stockage 2 sont avantageusement en vis-à-vis l'un de l'autre et alignés l'un par rapport à l'autre suivant la troisième direction Y. Au moins une allée de circulation, en particulier plusieurs allées de circulation, s'étendent selon la deuxième direction X entre deux rangées de racks de stockage 2 respectives. Chaque rangée de racks de stockage 2 comporte une succession, selon la deuxième direction X, d'au moins deux racks de stockage 2 espacés les uns des autres par des allées de circulation s'étendant selon la troisième direction Y. Les rangées de racks de stockage 2 sont notamment alignées les unes aux autres.

Cet agencement précédemment décrit de l'installation de transport et de stockage avec des allées de circulation s'étendant respectivement suivant la deuxième direction X et la troisième direction Y, permet de faciliter la circulation au sein de l'installation de transport et de stockage, et le placement et la récupération de conteneurs ou de bacs dans et depuis les alvéoles suivant une direction horizontale, ici la deuxième direction X.

Chacune de l'au moins une allée 4 de circulation entre deux racks de stockage 2 respectifs, qui s'étend en particulier selon la troisième direction Y, est formée d'une pluralité de colonnes de circulation verticale consécutives. Chaque colonne de circulation verticale dessert au moins une colonne d'alvéoles respective, par exemple une colonne d'alvéoles de l'un desdits deux racks de stockage, ou deux colonnes d'alvéoles respectivement de l'un et de l'autre desdits deux racks de stockage.

L'installation 1 de transport et de stockage peut en outre comprendre au moins un véhicule 3 automatisé, de préférence une pluralité de véhicules. Le véhicule 3 peut être un AGV, l'acronyme AGV désignant « Automated Guided Vehicle ». Le véhicule 3 est configuré pour s'élever ou descendre dans l'une des colonnes de circulation verticale 41. A cette fin, chacun de l'au moins un véhicule 3 comprend des moyens de grimpe adaptés pour coopérer avec des montants 21 des racks de stockage 2 donnant sur ladite colonne de circulation verticale 41. Plus précisément, le véhicule 3 peut comprendre un châssis et deux moyens de grimpe de chaque côté du châssis selon la deuxième direction X. Les moyens de grimpe sont par exemple agencés aux quatre coins du châssis et entre le châssis et l'un des racks de stockage 2 selon la deuxième direction X. Les moyens de grimpe permettent par conséquent d'assurer un déplacement selon la première direction Z du véhicule le long des racks de stockage 2, en coopérant typiquement avec des éléments de grimpe agencés sur les montants 21 suivant la première direction Z.

Les moyens de grimpe 31 peuvent comprendre au moins une roue dentée, motorisée, de préférence plusieurs roues motorisées, typiquement aux quatre coins du châssis du véhicule. La roue dentée ou chaque roue dentée est configurée pour engrener avec un élément de grimpe 24 qui peut être typiquement une crémaillère ou une chaîne à rouleaux, s'étendant suivant la hauteur d'un montant 21. Le véhicule peut ainsi accéder à l'une des alvéoles de la colonne d'alvéoles accessible depuis la colonne de circulation verticale respective afin de placer ou de récupérer un conteneur ou un bac de l'alvéole selon la deuxième direction X. Pour ce faire, le véhicule peut comprendre un dispositif de préhension comprenant un support mobile par rapport au châssis qui est configuré pour passer d'une position escamotée de chargement d'un bac sur le châssis du véhicule et dans laquelle le support est logé sur le châssis, et jusqu'à une position déployée de déchargement dans laquelle le support mobile s'étend en porte à faux du châssis pour décharger/déposer le bac et comme par exemple connu en soi du document EP3638607A1 de la présente Demanderesse.

L'installation 1 de transport et de stockage comprend en outre au moins un système de maintenance 10 configuré pour circuler dans l'au moins une allée 4 de circulation. Le système de maintenance est notamment configuré pour permettre la réalisation d'opérations en hauteur par un opérateur, en particulier des opérations de montage et/ou de maintenance, et notamment de la maintenance d'un véhicule. En effet, le véhicule peut, en opération, se retrouver bloqué en hauteur dans une colonne de circulation verticale, par exemple suite à une panne. Il arrive par exemple que le véhicule se retrouve en biais, arc-bouté contre les éléments de grimpe, c'est-à-dire que le châssis du véhicule est incliné par rapport à un plan horizontal perpendiculaire à la première direction Z. Le système de maintenance 10 permet de faire intervenir un opérateur en hauteur afin de débloquer le véhicule.

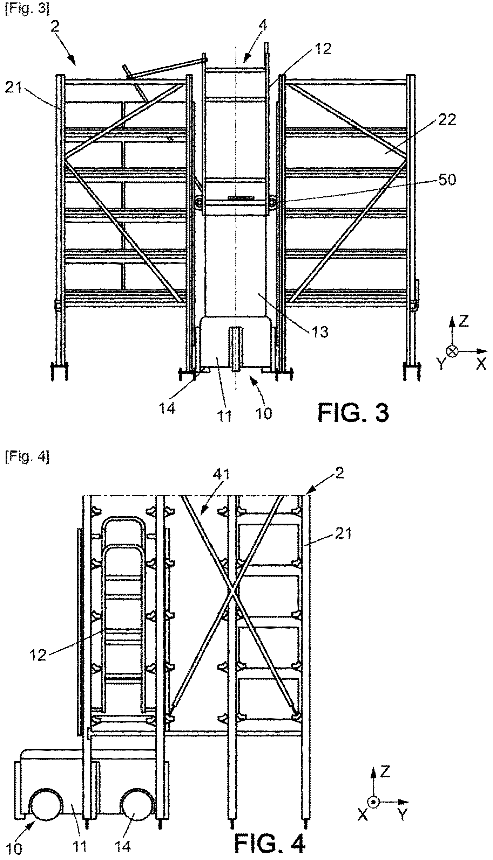

Les figures 3 et 4 illustrent deux vues de deux racks de stockage 2 délimitant une allée 4 de circulation entre eux et un exemple de système de maintenance 10 selon la présente divulgation, notamment pour une intervention dans ladite allée de circulation. Pour assurer la sécurité et la stabilité de l'opérateur, la base sur laquelle l'opérateur est destiné à se tenir est fixe par rapport à la plateforme mobile 12, c'est-à-dire qu'elle ne comprend pas d'élément mobile par rapport à la plateforme.

Le système de maintenance 10 comprend un châssis d'embase 11 apte à circuler au sol dans l'au moins une allée 4 de circulation, une plateforme mobile 12 destinée à recevoir un opérateur et un appareil de levage 13 intercalé entre la plateforme mobile 12 et le châssis d'embase 11. Le châssis d'embase peut comprendre un véhicule motorisé ou non. Le châssis d'embase 11 peut comprendre deux paires de roues 14 pour la circulation du système de maintenance 10 sur le sol de l'installation de transport et de stockage. La plateforme mobile 12 comporte notamment une base, s'étendant sensiblement suivant un plan perpendiculaire à la premier direction Z, et un garde-corps, s'étendant en périphérie de la base. La base et le garde-corps forment un panier destiné à recevoir l'opérateur.

L'appareil de levage 13 comprend au moins une partie de base solidaire du châssis d'embase 11, une partie mobile solidaire de la plateforme mobile 12, et un mécanisme d'extension configuré pour déployer la partie mobile en hauteur afin de monter la plateforme mobile 12 et la rétracter vers le châssis d'embase 11 dans une position de moindre encombrement vertical du système de maintenance 10. Le mécanisme d'extension configuré pour déployer la partie mobile en hauteur afin de monter la plateforme mobile 12 et la rétracter vers le châssis d'embase 11 dans une position de moindre encombrement vertical du système de maintenance 10 peut notamment comporter au moins un, par exemple un ou plusieurs, mât télescopique ou un mécanisme de levage à ciseaux. Un tel système de maintenance véhiculé et apte à se déployer en hauteur et à se rétracter offre l'avantage d'être mobile et flexible, et ainsi de faciliter la circulation et les interventions en hauteur au sein de l'installation. Le système de maintenance 10 peut être déplacé aisément, typiquement par déplacement du châssis d'embase, dans ladite position de moindre encombrement vertical. De plus, un tel système de maintenance ne nécessite pas la mise en place de structures, par exemple de guidage ou d'encrage, au sol ou au plafond de l'installation de transport et de stockage. Par conséquent, un tel système de maintenance permet de faciliter la circulation de véhicules de type AGV dans les allées de circulation, et même sous les racks de stockage le cas échéant.

Par ailleurs, le système de maintenance 10 comporte un dispositif de guidage vertical et de stabilisation 50 de la plateforme mobile comportant au moins un organe de guidage 51. Le dispositif de guidage et de stabilisation comporte au moins un organe de guidage 51 configuré pour coopérer avec un montant 21 de rack de stockage donnant sur l'allée 4 de circulation respective. Le dispositif de guidage vertical et de stabilisation est notamment configuré pour stabiliser la plateforme mobile en hauteur par un appui contre les montants. Ceci permet avantageusement d'améliorer la stabilité du système de maintenance et en conséquence de permettre d'atteindre des hauteurs plus élevées avec un tel système de maintenance flexible et mobile.

En résumé, le système de maintenance selon la présente divulgation offre l'avantage considérable, d'une part, de pouvoir être mobile, flexible et peu encombrant, et d'autre part, de pouvoir atteindre une hauteur plus élevée en comparaison d'un véhicule de maintenance ne présentant pas de dispositif de guidage et de stabilisation. En effet, le dispositif de guidage et de stabilisation offre une meilleure stabilité au système de maintenance, pour permettre à un opérateur d'effectuer des opérations en hauteur en toute sécurité, tout en limitant l'encombrement du système de maintenance, en termes d'emprise au sol et/ou de masse. De plus, un tel système de maintenance ne nécessite pas la mise en place d'infrastructures supplémentaires dans l'installation de transport et de stockage. En effet, le système de maintenance peut circuler librement dans les allées de circulation selon respectivement la deuxième direction et la troisième direction.

De préférence, ledit système de maintenance 10 est tel que le mécanisme d'extension est configuré pour déployer la partie mobile jusqu'à une hauteur maximale supérieure ou égale à 10 m, en particulier supérieure ou égale à 12 m, et en particulier supérieure ou égale à 14 m. Dans ce contexte, le châssis d'embase 11, peut présenter une emprise au sol maximale inférieure à 1500 mm en longueur, en particulier de 1200 mm, et inférieure à 750 mm en largeur, en particulier de 700 mm. Le système de maintenance peut présenter une hauteur de 2200 mm dans la position de moindre encombrement vertical. Le châssis d'embase 11 peut avantageusement présenter une masse inférieure ou égale à 500 kg. On entend par emprise au sol, la surface circonférentielle maximale occupée par le système de maintenance au sol. Ces caractéristiques permettent d'assurer une flexibilité et une maniabilité du système de maintenance, dues à un encombrement réduit du système de maintenance en termes d'emprise au sol et de masse, tout en permettant l'atteinte d'une hauteur maximale élevée. En outre, l'encombrement du système de maintenance est avantageusement tel qu'il correspond à un encombrement d'une nacelle élévatrice mobile classique du commerce, telle que précédemment décrite. En particulier, l'encombrement de la plateforme mobile peut correspondre à l'encombrement d'un ensemble formé du panier et du mât d'une telle nacelle élévatrice mobile classique. La présente divulgation permet par conséquent d'adapter facilement une nacelle élévatrice mobile du commerce, en particulier en y ajoutant le dispositif de guidage vertical et de stabilisation, afin de permettre d'élever la plateforme mobile sur une hauteur plus grande que la nacelle élévatrice mobile classique sans nécessiter l'augmentation de l'emprise au sol de la nacelle élévatrice mobile classique pour en assurer la stabilité.

Le dispositif de guidage vertical et de stabilisation est décrit plus en détails ci-après.

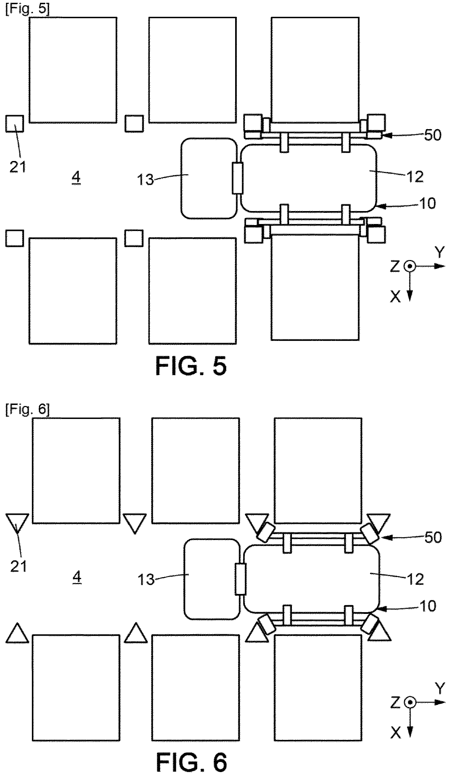

Il est fait référence aux figures 5, 6, 7, 8 et 9 illustrant schématiquement une vue de haut des exemples de deux racks de stockage délimitant entre eux une allée 4 de circulation et d'un système de maintenance 10 positionné dans ladite allée 4 de circulation. Il convient de noter que les différents modes de réalisation décrits ci-après peuvent être combinés entre eux.

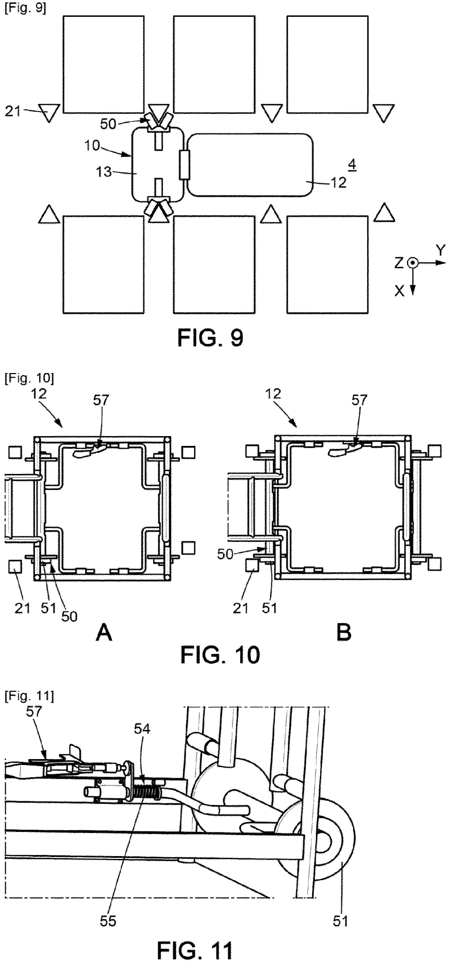

De manière générale, la plateforme mobile 12 et/ou la partie mobile du mécanisme d'extension 13 peuvent comporter le dispositif de guidage vertical et de stabilisation 50. En effet, la partie mobile du mécanisme d'extension étant solidaire de la plateforme mobile, le dispositif de guidage et de stabilisation peut être positionné sur cette partie mobile tout en permettant le guidage et la stabilisation de la plateforme mobile lors de son extension et de sa rétractation. En somme, le dispositif de guidage vertical et de stabilisation doit avantageusement être apte à s'élever en hauteur et à se rétracter avec le châssis en accompagnant le mouvement d'élévation et de descente de la plateforme mobile pour assurer le guidage et la stabilisation en hauteur de celle-ci. Les figures 5, 6, 7 et 8 illustrent schématiquement des exemples où la plateforme mobile comporte le dispositif de guidage vertical et de stabilisation. La figure 9 illustre schématiquement un exemple où la partie mobile du mécanisme d'extension 13 comporte le dispositif de guidage vertical et de stabilisation. Il est également envisageable que la plateforme mobile 12 et la partie mobile du mécanisme d'extension 13 comportent chacune respectivement un dispositif de guidage vertical et de stabilisation (non représenté sur les figures).

En outre, le dispositif de guidage vertical et de stabilisation 50 comporte de préférence au moins une paire d'organes de guidage 51. Chaque organe de guidage de la paire d'organes de guidage est notamment configuré pour prendre appui sur un montant respectif 21 suivant une même direction mais selon un sens opposé d'un appui de l'autre organe de guidage de la paire d'organes de guidage sur un montant respectif 21. Ceci permet d'assurer une meilleure stabilité de la plateforme mobile lors du guidage en hauteur de la plateforme mobile.

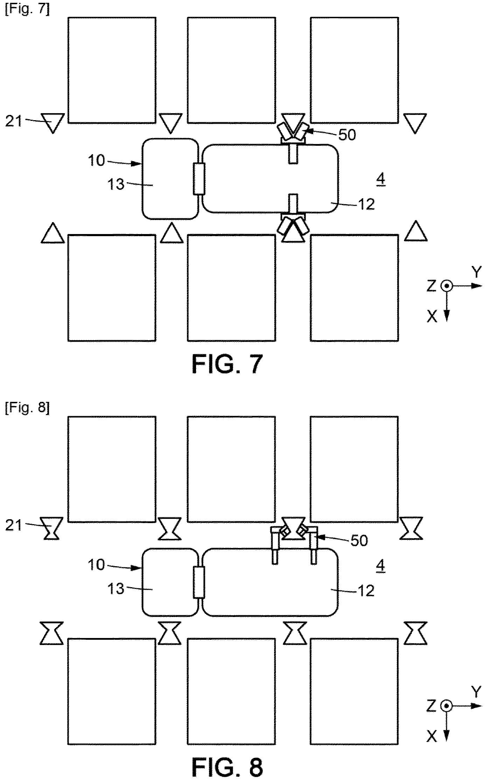

Les organes de guidage d'une paire, en particulier de chaque paire, d'organes de guidage peuvent notamment être destinés à coopérer avec deux montants 21 positionnés respectivement de part et d'autre d'une allée 4 de circulation respective, comme illustré aux figures 5, 6, 7 et 9. Ceci permet d'assurer un guidage de la plateforme mobile de part et d'autre de l'allée de circulation respective. Alternativement, les organes de guidage d'une paire, en particulier de chaque paire, d'organes de guidage peuvent être destinés à coopérer avec un même montant 21, ou avec deux montants 21 positionnés sur une même rangée de montants. La figure 8 illustre un exemple de dispositif de guidage et de stabilisation comportant une paire d'organes de guidage, l'un et l'autre organe de guidage de la paire d'organes de guidage étant positionnés respectivement de part et d'autre d'un même montant et destinés à coopérer avec ledit même montant.

Par ailleurs, le dispositif de guidage vertical et de stabilisation 50 peut comprendre une paire d'organes de guidage 51, deux paires d'organes de guidage 51, ou plus de deux paires d'organes de guidage. Le nombre de paires d'organes de guidage, leur configuration et leur positionnement par rapport au système de maintenance est notamment adapté pour assurer la stabilité en hauteur de la plateforme mobile et la partie mobile du mécanisme d'extension. Le nombre de paires d'organes de guidage et leur positionnement peut, en particulier, correspondre à une longueur de la plateforme mobile et à la hauteur maximale pour le déploiement de la partie mobile du mécanisme d'extension.

Néanmoins, il est également envisageable de mettre en oeuvre un dispositif de guidage et de stabilisation 50 comprenant un nombre impair d'organes de guidage 51, l'important étant que le nombre d'organes de guidage 51, leur configuration et leur positionnement permet d'assurer la stabilité de la plateforme mobile, en particulier dans un plan sensiblement perpendiculaire à la première direction Z, lors de son extension en hauteur et lors de sa rétraction.

Les figures 5 et 6 représentent schématiquement des exemples de dispositif de guidage vertical et de stabilisation comportant deux paires d'organes de guidage. De manière générale, les deux paires d'organes de guidage peuvent avantageusement être espacées de sorte à coopérer avec des montants consécutifs d'une rangée de montants. Les organes de guidage des deux paires d'organes de guidage peuvent être agencés par exemple à quatre coins de la plateforme mobile.

Les figures 7, 8 et 9 représentent schématiquement des exemples de dispositif de guidage vertical et de stabilisation comportant une paire d'organes de guidage. La paire d'organe de guidage peut notamment être agencée à une extrémité de la plateforme mobile selon la troisième direction Y opposée à la partie mobile du mécanisme d'extension, comme illustré à la figure 7. Dans l'exemple illustré à la figure 7, les organes de guidage de la paire d'organes de guidage sont destinés à coopérer avec deux montants 21 positionnés respectivement de part et d'autre d'une allée 4 de circulation respective. La paire d'organe de de guidage peut alternativement être agencée à une position sensiblement médiane de la plateforme mobile selon la troisième direction Y, comme illustré à la figure 8. Dans l'exemple illustré à la figure 8, les organes de guidage de la paire d'organes de guidage sont destinés à coopérer avec un même montant 21. La paire d'organe de guidage peut alternativement être agencée à une position sensiblement médiane de la partie mobile du mécanisme d'extension selon la troisième direction Y, comme illustré à la figure 9. Dans l'exemple illustré à la figure 9, les organes de guidage de la paire d'organes de guidage sont destinés à coopérer avec deux montants 21 positionnés respectivement de part et d'autre d'une allée 4 de circulation respective.

Comme écrit précédemment, il est également envisageable de mettre en oeuvre plus de deux paires d'organes de guidage. Par exemple, le dispositif de guidage vertical et de stabilisation peut comporter trois paires d'organes de guidage. La plateforme mobile peut alors s'étendre en longueur sur trois montants successifs.

Par ailleurs, l'organe de guidage 51 peut notamment être configuré pour coopérer avec différents profils de montants. Plus précisément, l'organe de guidage 51 peut être configuré pour venir contre au moins une surface d'appui d'un montant respectif, la surface d'appui s'étendant selon un plan dont la normale est perpendiculaire à la première direction Z. Par exemple, l'organe de guidage peut être configuré pour venir contre une unique surface d'appui, ou deux surfaces d'appui d'un montant respectif, voire plus de deux surfaces d'appui. La coopération des organes de guidage avec les surfaces d'appui est en particulier adaptée pour empêcher un mouvement du dispositif de guidage et de stabilisation dans un plan perpendiculaire à la première direction Z lorsque qu'il est engagé sur les montants.

Lorsque l'organe de guidage est configuré pour venir contre une unique surface d'appui, le plan de la surface d'appui peut avantageusement présenter une composante selon la deuxième direction X et une composante selon la troisième direction Y. La figure 6 illustre un tel exemple où le dispositif de guidage et de stabilisation comprend quatre organes de guidage, chacun configuré pour venir contre une unique surface d'appui d'un montant respectif. Cette configuration permet de bloquer le mouvement du dispositif de guidage et de stabilisation dans un plan perpendiculaire à la première direction Z lorsque qu'il est engagé sur les montants.

Lorsque l'organe de guidage est configuré pour venir contre deux surfaces d'appui, les plans des surfaces d'appui sont avantageusement non-colinéaires l'un par rapport à l'autre. Cette configuration permet de bloquer le mouvement du dispositif de guidage et de stabilisation dans un plan perpendiculaire à la première direction Z lorsque qu'il est engagé sur les montants. Les figures 5, 7, 8 et 9 illustrent schématiquement des exemples dans lesquels l'organe de guidage est configuré pour venir contre deux surfaces d'appui. Le plan de l'une des deux surfaces d'appui peut présenter une normale perpendiculaire à la deuxième direction X, le plan de l'autre des deux surfaces d'appui peut présenter une normale perpendiculaire à la troisième direction Y. Un tel exemple est illustré sur la figure 5. Alternativement, les plans des deux surfaces d'appui peuvent chacun présenter une composante selon la deuxième direction X et une composante selon la troisième direction Y, comme illustré sur les figures 7, 8 et 9.

En outre, le dispositif de guidage vertical et de stabilisation 50 peut avantageusement comprendre un mécanisme de déploiement 57 configuré pour passer ledit au moins un organe de guidage 51 du dispositif de guidage verticale et de stabilisation 50 d'une position dégagée d'un montant 21 et jusqu'à une position engagée avec le montant 21 respectif. Les figures 10A et 10B illustrent un exemple de système de maintenance 10 respectivement dans une position dégagée et dans une position engagée de l'au moins un organe de guidage 51. La mise en oeuvre d'un mécanisme de déploiement permet avantageusement de réduire l'encombrement du système de maintenance lorsque l'au moins un organe de guidage n'est pas en position engagée sur le montant respectif, en particulier lors de la circulation du système de maintenance dans une allée de circulation.

Le mécanisme de déploiement peut comprendre, voire consister en, un mécanisme de déploiement mécanique. On entend par un mécanisme de déploiement mécanique, un mécanisme de déploiement apte à être déclenché manuellement par un opérateur. Par exemple, le mécanisme de déploiement 57 peut comprendre au moins un dispositif de serrage, de type sauterelle mécanique, configuré pour déployer ou rétracter l'au moins un organe de guidage. L'au moins un organe de guidage peut notamment être monté à un barreau, le barreau étant monté au dispositif de serrage. Le dispositif de serrage permet alors de déployer et de rétracter le barreau. En particulier, plusieurs organes de guidage, par exemple deux organes de guidage, peuvent être montés à un même barreau, comme illustré aux figures 10A et 10B.

Toutefois, d'autres mécanismes de déploiement peuvent être envisagés. Par exemple, le mécanisme de déploiement peut comprendre, voire consister en, un mécanisme de déploiement motorisé, un mécanisme de déploiement par électroaimant, ou encore un mécanisme de déploiement hydraulique comportant un vérin hydraulique et/ou pneumatique par exemple.

En outre, le dispositif de guidage vertical et de stabilisation 50 peut comprendre un mécanisme de précontrainte 54 destiné à exercer une pression dudit au moins un organe de guidage 51 contre un montant 21. Ceci permet de compenser un éventuel jeu entre l'organe de guidage et le montant le long de celui-ci. En particulier, lorsque l'on cherche, comme dans la présente divulgation, à atteindre des hauteurs élevées, le montant peut présenter une flèche par rapport à la première direction Z. Le mécanisme de précontrainte permet de compenser cette flèche et d'assurer la stabilité de la plateforme mobile jusqu'à la hauteur maximale que peut atteindre cette dernière.

Selon un mode de réalisation illustré à la figure 11, le mécanisme de précontrainte 54 comporte un organe ressort 55 configuré pour contraindre élastiquement ledit au moins un organe de guidage 51 sur le montant 21 en compensant un jeu sur la hauteur des montants 21. Le mécanisme de déploiement peut comprendre un dispositif de manoeuvre configuré pour passer ledit au moins un organe ressort 55 d'un état de moindre contrainte, voire non contraint, dans la position dégagée dudit au moins un organe de guidage 51 jusqu'à un état de plus forte contrainte dudit au moins un organe de guidage 51, dans la position engagée de l'organe de guidage 51.

Par ailleurs, l'au moins un organe de guidage est avantageusement configuré pour assurer un guidage linéaire de la plateforme mobile 12 le long du montant 21 respectif. Le guidage doit notamment permettre d'assurer l'appui de l'organe de guidage contre le moment tout en limitant les frottements de l'organe de guidage et du montant respectif.

En particulier, ledit au moins un organe de guidage 51 dudit dispositif de guidage vertical et de stabilisation 50 peut comprendre au moins une roue de guidage vertical destinée à venir rouler contre un montant 21. L'organe de guidage 51 peut par exemple comporter une ou deux roues de guidage. La roue de guidage vertical présente notamment un axe de rotation perpendiculaire à une direction longitudinale du montant 21.

Alternativement l'organe de guidage peut être configuré pour assurer un guidage linéaire à billes de la plateforme mobile 12 le long du montant 21 respectif. Plus précisément, l'organe de guidage peut comprendre des billes aménagées dans une cage, et le montant respectif peut présenter au moins une gorge de guidage de forme complémentaire à celle des billes afin de permettre aux billes de rouler contre l'au moins une gorge de guidage respective. Ce type de guidage permet de réduire la friction et les pressions de contact entre les surfaces de l'organe de guidage et du montant, offrant ainsi un déplacement précis de l'organe de guidage par rapport au montant.

L'organe de guidage peut être configuré pour assurer un guidage linéaire à rouleaux de la plateforme mobile 12 le long du montant 21 respectif. A cette fin, l'organe de guidage peut comprendre un ou plusieurs rouleaux cylindriques. Ce type de guidage permet de pour réduire la friction entre l'organe de guidage et le montant. Ce type de guidage présente l'avantage d'être plus durable et de pouvoir supporter des charges plus lourdes que le guidage à billes.

L'organe de guidage peut être configuré pour assurer un guidage linéaire à patin de la plateforme mobile 12 le long du montant 21 respectif. Ce type de guidage permet de réduire la friction entre les surfaces de glissement entre l'organe de guidage et le montant respectif. Ce type de guidage est notamment avantageux pour des applications nécessitant des mouvements rapides et répétitifs.

L'organe de guidage peut être configuré pour assurer un guidage linéaire magnétique de la plateforme mobile 12 le long du montant 21 respectif. Ce type de guidage met notamment en oeuvre des champs magnétiques pour permettre de supporter la charge de la plateforme mobile. Ce type de guidage offre l'avantage de limiter la friction entre l'organe de guidage et le montant, d'assurer une précision et une capacité de charge élevée.

L'organe de guidage peut être configuré pour assurer un guidage linéaire à glissière de la plateforme mobile 12 le long du montant 21 respectif. L'organe de guidage peut être configuré pour coopérer avec le montant respectif sous forme de rail de guidage. En particulier, l'organe de guidage et le montant respectif sont configurés pour être en contact surface contre surface l'un avec l'autre de sorte à former une liaison glissière. L'organe de guidage et le montant respectif sont en particulier réalisés dans un matériau présentant un coefficient de frottement suffisamment faible pour permettre un bon fonctionnement de la liaison glissière. L'organe de guidage et le rail de guidage peuvent par exemple être en acier. Cette solution présente l'avantage d'être simple et peu coûteuse. Elle peut être avantageuse dans des applications nécessitant des mouvements linéaires pour parcourir de longues distances. Toutefois, cette solution est moins précise et moins résistante à l'usure que les autres solutions de guidage précédemment décrites.

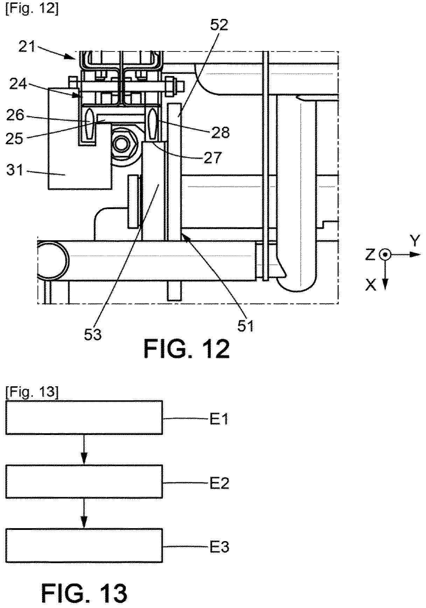

Il est fait référence à la figure 12 représentant schématiquement une vue agrandie d'un organe de guidage coopérant avec un montant 21. De manière préférée, et de manière générale, les moyens de grimpe 31 de l'un de l'au moins un véhicule 3 agencé dans une colonne de circulation verticale et le dispositif de guidage vertical et de stabilisation 50 de la plateforme mobile 12 guidée dans une colonne de circulation adjacente, sont configurés pour coopérer simultanément avec un même montant 21 d'un des racks de stockage 2 sans gêner le déplacement, suivant la direction du montant 21, du véhicule 3 respectif ou de la plateforme mobile 12 respective par rapport audit même montant 21. Cette caractéristique permet avantageusement d'approcher le système de maintenance au plus proche d'un véhicule bloqué pour en assurer la maintenance.

Le moyen de grimpe 31 notamment schématiquement illustré à la figure 12, peut être une roue dentée, motorisée du véhicule, qui engrène avec un élément de grimpe 24 solidaire d'un montant 21, en particulier une crémaillère (ou une chaine à rouleaux), seulement sur une première portion latérale dudit élément de grimpe, adjacente à la colonne de circulation du véhicule, alors qu'une deuxième portion latérale dudit élément de grimpe 24, adjacente à la colonne de circulation à l'intérieur de laquelle est guidé le système de maintenance est laissée libre pour la circulation dudit organe de guidage 51, en particulier un galet venant s'appuyer au guidage. L'organe de guidage 51, et plus généralement la plateforme mobile peut être ainsi déplacé en hauteur dans une colonne de circulation, sans interférence avec un véhicule du type AGV bloqué dans une colonne de circulation adjacente. La crémaillère comporte une paroi principale 25 s'étendant selon la première direction Z et en vis-à-vis de la colonne de circulation verticale, et deux parois latérales 26, chacune agencée à une extrémité respective de la paroi principale 26 selon la troisième direction Y. Chaque paroi latérale 26 s'étend selon la première direction Z et en saillie par rapport à la paroi principale selon la deuxième direction X. On remarque que ledit organe de guidage 51 peut être un galet comprenant notamment :
- une première surface de roulement 53 configurée pour assurer le guidage de la plateforme en venant coopérer en roulement avec un première surface de guidage 27 de l'une des parois latérales 26 de la crémaillère, afin d'assurer une stabilisation de la plateforme mobile suivant la deuxième direction X,
- un épaulement 52 saillant de la surface de roulement 53 configuré pour venir coopérer avec une deuxième surface de guidage 28 de l'une des parois latérales 26 de la crémaillère afin d'assurer une stabilisation de la plateforme mobile suivant la troisième direction Y.

En outre, de manière générale, ledit châssis d'embase 11 peut être équipé d'au moins un dispositif de guidage horizontal 60 s'étendant en longueur suivant le châssis d'embase 11 et étant configuré pour à coopérer avec des éléments de rack de stockage 2, de positions discontinues suivant la longueur de l'allée 4 de maintenance afin d'assurer le guidage du système de maintenance 10 le long de l'allée 4 de maintenance. Ainsi, il est plus aisé de positionner correctement le système de maintenance dans l'allée 4 de maintenance afin de pouvoir faciliter la maniabilité du système de maintenance et l'engagement du système de maintenance sur les montants.

La figure 13 illustre schématiquement un procédé de maintenance, selon un aspect de la présente divulgation, d'une installation 1 de transport et de stockage lorsqu'un véhicule est bloqué en hauteur dans une colonne de circulation verticale de l'installation 1 de transport et de stockage.

D'une manière générale, le procédé comprend :
- déplacer E1 le système de maintenance 10 jusqu'à une colonne de circulation verticale 41 consécutive à une colonne de circulation verticale 41 dans laquelle un véhicule 3 est bloqué,
- coupler E2 l'organe de guidage du dispositif de guidage vertical et de stabilisation 50 avec un montant 21 donnant sur l'allée 4 de circulation respective,
- déployer E3 la plateforme mobile 12 à hauteur du véhicule 3 bloqué.

Le procédé selon la présente divulgation offre par conséquent l'avantage d'être facilement mis en oeuvre tout en assurant la sécurité d'un opérateur lors d'une intervention en hauteur. Le déblocage du véhicule selon un étape E4 peut être effectué par un opérateur, de manière manuelle. Il est encore possible d'envisager d'équiper la plateforme d'un préhenseur en particulier robotisé pour assurer le déblocage et la saisie du véhicule.

## Revendications

1. Système de maintenance (10) pour une installation (1) de transport et de stockage comprenant des racks de stockage (2) agencés de sorte à former au moins une allée (4) de circulation entre deux racks de stockage (2) respectifs, les racks de stockage (2) comportant des montants (21) verticaux, le système de maintenance (10) comprenant :
- un châssis d'embase (11) apte à circuler au sol dans l'au moins une allée (4) de circulation,
- une plateforme mobile (12) destinée à recevoir un opérateur,
- un appareil de levage (13) intercalé entre la plateforme mobile (12) et le châssis d'embase (11), l'appareil de levage (13) comprenant au moins une partie de base solidaire du châssis d'embase (11), une partie mobile solidaire de la plateforme mobile (12), et un mécanisme d'extension configuré pour déployer la partie mobile en hauteur afin de monter la plateforme mobile (12) et la rétracter vers le châssis d'embase (11) dans une position de moindre encombrement vertical du système de maintenance (10),
**caractérisé en ce que** le système de maintenance (10) comporte un dispositif de guidage vertical et de stabilisation (50) de la plateforme mobile (12), le dispositif de guidage vertical et de stabilisation (50) comportant au moins un organe de guidage (51) configuré pour coopérer avec un montant (21) donnant sur l'allée (4) de circulation respective, et **en ce que**
la plateforme mobile (12) comporte une base s'étendant sensiblement suivant un plan perpendiculaire à la direction verticale, et un garde-corps, s'étendant en périphérie de la base.

2. Système de maintenance (10) selon la revendication 1, dans lequel le dispositif de guidage vertical et de stabilisation (50) comprend un mécanisme de déploiement (57) configuré pour passer ledit au moins un organe de guidage (51) du dispositif de guidage verticale et de stabilisation (50) d'une position dégagée d'un montant (21) et jusqu'à une position engagée avec le montant (21) respectif.

3. Système de maintenance (10) selon l'une des revendications précédentes, dans lequel ledit au moins un organe de guidage (51) est configuré pour assurer un guidage linéaire de la plateforme mobile (12) le long du montant (21) respectif.

4. Système de maintenance (10) selon l'une des revendications précédentes, dans lequel ledit au moins un organe de guidage (51) dudit dispositif de guidage vertical et de stabilisation (50) comprend au moins une roue de guidage vertical destinée à venir rouler contre un montant (21), la roue de guidage vertical ayant un axe de rotation perpendiculaire à une direction longitudinale du montant (21).

5. Système de maintenance (10) selon l'une des revendications précédentes, dans lequel ledit dispositif de guidage vertical et de stabilisation (50) comprend un mécanisme de précontrainte (54) destiné à exercer une pression dudit au moins un organe de guidage (51) contre un montant (21).

6. Système de maintenance (10) selon la revendication précédente, dans lequel le mécanisme de précontrainte (54) comporte un organe ressort (55) configuré pour contraindre élastiquement ledit au moins un organe de guidage (51) sur le montant (21) en compensant un jeu sur la hauteur des montants (21).

7. Système de maintenance (10) selon les revendications 2 et 6, dans lequel le mécanisme de déploiement (57) comprend un dispositif de manoeuvre configuré pour passer ledit au moins un organe ressort (55) d'un état de moindre contrainte, voire non contraint, dans la position dégagée dudit au moins un organe de guidage (51) jusqu'à un état de plus forte contrainte dudit au moins un organe de guidage (51), dans la position engagée de l'organe de guidage (51).

8. Système de maintenance (10) selon l'une des revendications précédentes, dans lequel le dispositif de guidage vertical et de stabilisation (50) comporte au moins une paire d'organes de guidage (51), destinée à coopérer avec des montants (21) positionnés respectivement de part et d'autre d'une allée (4) de circulation respective.

9. Système de maintenance (10) selon l'une des revendications précédentes, dans lequel ledit système de maintenance (10) est tel que le mécanisme d'extension est configuré pour déployer la partie mobile jusqu'à une hauteur maximale supérieure ou égale à 10 m, en particulier supérieure ou égale à 12 m, le système de maintenance (10) présentant une masse inférieure ou égale à 500 kg, et présentant, notamment le châssis d'embase (11), une emprise au sol maximale :
- inférieure à 1500 mm en longueur, et en particulier de 1200 mm,
- inférieure à 750 mm en largeur, en particulier de 700 mm.

10. Système de maintenance (10) selon l'une des revendications précédentes, dans lequel le châssis d'embase (11) comprend deux paires de roues (14) pour la circulation du système (10) sur le sol.

11. Système de maintenance (10) selon l'une des revendications précédentes, dans lequel ledit châssis d'embase (11) est équipé d'au moins un dispositif de guidage horizontal (60) s'étendant en longueur suivant le châssis d'embase (11) et étant configuré pour à coopérer avec des éléments de racks de stockage (2), de positions discontinues suivant la longueur de l'allée (4) de maintenance afin d'assurer le guidage du système de maintenance (10) le long de l'allée (4) de maintenance.

12. Système de maintenance (10) selon l'une des revendications précédentes, dans lequel le mécanisme d'extension configuré pour déployer la partie mobile en hauteur afin de monter la plateforme mobile (12) et la rétracter vers le châssis d'embase (11) dans la position de moindre encombrement vertical du système de maintenance (10) comporte au moins un mât télescopique ou un mécanisme de levage à ciseaux.

13. Installation (1) de transport et de stockage comprenant des racks de stockage (2) comportant des colonnes consécutives d'alvéoles, les racks de stockage (2) étant agencés de sorte à former au moins une allée (4) de circulation entre deux racks de stockage (2) respectifs, les racks de stockage (2) comportant des montants (21) verticaux,
l'installation (1) comprenant en outre un système de maintenance (10) selon l'une des revendications précédentes configuré pour circuler dans l'au moins une allée (4) de circulation, l'au moins un organe de guidage (51) du dispositif de guidage vertical et de stabilisation (50) du système de maintenance (10) étant configuré pour coopérer avec un montant (21) de rack de stockage donnant sur une allée (4) de circulation respective.

14. Installation (1) selon la revendication précédente, chacune de l'au moins une allée (4) de circulation, entre deux racks de stockage (2) respectifs, étant formée d'une pluralité de colonnes de circulation verticale (41) consécutives, chaque colonne de circulation verticale (41) desservant au moins une colonne d'alvéoles respective, dans lequel l'installation (1) comprend en outre au moins un véhicule (3) automatisé configuré pour s'élever ou descendre dans une colonne de circulation verticale (41), chacun de l'au moins un véhicule (3) comprenant des moyens de grimpe adaptés pour coopérer avec des montants (21) des racks de stockage (2) donnant sur ladite colonne de circulation verticale (41).

15. Installation (1) selon la revendication précédente, dans lequel les moyens de grimpe de l'un de l'au moins un véhicule (3) agencé dans une colonne de circulation verticale et le dispositif de guidage vertical et de stabilisation (50) de la plateforme mobile (12) guidée dans une colonne de circulation adjacente, sont configurés pour coopérer simultanément avec un même montant (21) d'un des racks de stockage (2) sans gêner le déplacement, suivant la direction du montant (21), du véhicule (3) respectif ou de la plateforme mobile (12) respective par rapport audit même montant (21).

16. Procédé de maintenance d'une installation (1) selon l'une des revendications 14 à 15, le procédé comprenant :
- déplacer (E1) le système de maintenance (10) jusqu'à une colonne de circulation verticale (41) consécutive à une colonne de circulation verticale (41) dans laquelle un véhicule (3) est bloqué,
- coupler (E2) l'organe de guidage du dispositif de guidage vertical et de stabilisation (50) avec un montant (21) donnant sur l'allée (4) de circulation respective,
- déployer (E3) la plateforme mobile (12) à hauteur du véhicule (3) bloqué.
